# EUROPÄISCHE PATENTSCHRIFT

(11) **EP 0 365 928 B1**
(45) Veröffentlichungstag und Bekanntmachung des Hinweises auf die Patenterteilung: **03.05.1995**
(21) Anmeldenummer: 89118940.9
(22) Anmeldetag: 12.10.1989
(51) Int. Cl.: G01N 15/14, G06T 7/00

(54) **Verfahren zur Auswertung von Zellbildern**
Method for processing cell images
Procédé pour l'exploitation d'images de cellules

(30) Priorität: 28.10.1988 DE 3836716
(43) Veröffentlichungstag der Anmeldung: 02.05.1990
(73) Patentinhaber: Firma Carl Zeiss, D-73446 Oberkochen (DE)
(72) Erfinder: Kettler, Albrecht, Dr., D-7080 Aalen (DE)

(56) Entgegenhaltungen:
- ANALYTICAL AND QUANTITATIVE CYTOLOGY, Band 3, Nr. 3, 1981, Seiten 182-194; J.HOLMQUIST et al.: Tulips - The Uppsala-linkoping image processing system"
- CANADIAN JOURNAL OF MICROBIOLOGY, Band 31, Nr. 1, 1985, Seiten 35-44; D.E.CALDWELL et al.: "Evaluation of difference imagery for visualizing and quantitating microbial growth"
- PROCEEDINGS OF THE VIIITH ANNUAL CONFERENCE OF THE IEEE ENGINEERING IN MEDICINE AND BIOLOGY SOCIETY, Forth Worth, Texas, 7. - 10. November 1986, Seiten 906-911; B. JAGGI et al.:"Implementation and evaluation of the DMIPS cell analyser"
- HISTOCHEMISTRY, Band 84, 1986, Seiten 525-529, Springer Verlag, Berlin, DE; R.M. DONOVAN et al.: "A quantitative method for the analysis of cell shape and locomotion"
- JOURNAL OF NEUROSCIENCE METHODS, Band 1, 1979, Seiten 77-94, Elsevier/North-Holland Biomedical Press; D.J. FORBES et al.: "Computer-assisted mapping withthe light microscope"

## Beschreibung

Das Auswerten von Bilder von Zellkulturen gewinnt in der Forschung und bei Routineuntersuchungen immer mehr an Bedeutung. Neben der Erforschung des Zellwachstums von Primärkulturen (z.B. Tumorwachstum) wird hauptsächlich der Einfluß von Fremdeinwirkungen auf das Wachstums- und Bewegungsverhalten untersucht. Beispiele sind Toxizitäts- und Mutagenitätstests, die Prüfung von Implantat-Materialien auf Verträglichkeit mit dem Organismus und die Wirkungen von Pharmazeutika. Untersuchungen an Zellkulturen werden insbesondere unter dem Aspekt vorgenommen, Toxititätstest an höheren Organismen, d.h. Versuchstieren entbehrlich zu machen.

Um für die beschriebenen Anwendungsfälle statitisch relevante Aussagen treffen zu können, ist einerseits die Untersuchung einer großen Zahl von Zellen notwendig, andererseits ist es z.B. für Mutagenitätsuntersuchungen sowie für die Analyse des Bewegungsverhaltens von Zellen notwendig, das exakte "Schicksal" jeder Einzelzelle zu ermitteln.

Ein rein visuelles Verfolgen einzelner Zellen ist wegen der großen Anzahl mit einem immensen Arbeitsaufwand verbunden.

Es ist zwar bekannt, vor allem für Routineaufgaben rechnergestützte Verfahren einzusetzen, mit denen z.B. einfach die Anzahl der Zellen in einem bestimmten Bildfeld festgestellt bzw. ausgezählt wird. Hierfür sind bei geringen Anforderungen an die Auswertegenauigkeit auch vollautomatisch arbeitende Bildanalysesysteme verwendet. Solche Systeme sind jedoch für anspruchsvollere Aufgabenstellungen, wenn beispielsweise das Bewegungsverhalten einer Zelle analysiert oder Zellstammbaüme analysiert werden sollen, nicht geeignet. Für die letztgenannten Anwendungsfälle sind interaktive rechnergestützte Systeme besser geeignet.

Aus CAN. J MICROBIOLOGY, Vol. 31, Nr. 1, Seiten 35-44, (1985) ist ein Verfahren zur sichtbaren Darstellung und quantitativen Messung mikrobischen Wachstums bekannt. Dabei wird eine zeitliche Folge von Mikroskopbildern der Kultur mit einer Videokamera aufgezeichnet und nachfolgend in einem Rechner ausgewertet, wobei anhand der Differenzbilder jeweils aufeinanderfolgender Digitalbilder das über mehrere Zellen gemittelte Wachstum berechnet und entweder graphisch oder in Form von den Differenzbildern dargestellt wird.

Um den Wachstumsverlauf einer einzelnen Zelle zu verfolgen, darf nur eine Einzelzelle im Bildfeld enthalten sein. Das Verfahren liefert dann aber keine statistisch genügend sicheren Aussagen.

In Histochemistry, Vol. 84, Seiten 525-529, (1986) ist ein System zur Bestimmung des Bewegungsverhaltens von Leukozyten beschrieben. Auch hier wird eine zeitliche Folge von Mikroskopbildern der Kultur mit einer Videokamera aufgezeichnet. Mit Hilfe einer Bildanalyse werden die Positionen der Leukozyten in einem Anfangsbild bestimmt, im Rechner abgespeichert und das Ergebnis auf einem Monitor in Form eines Bildes dargestellt, in dem die außerhalb von Leukozyten liegenden Bildbereiche dunkel geschaltet sind. An dieser Stelle kann der Beobachter die in nachfolgenden Bildern zu verfolgenden Leukozyten auswählen. In den nachfolgenden Bildern wird dann durch Bildanalyse jeweils das zu jedem ausgewählten Leukozyt am nächsten benachbarte Leukozyt gesucht, jeweils dessen Mittelpunkt bestimmt und der Abstand der Mittelpunkte ermittelt. Die Positionen der Mittelpunkte in der Bildfolge können nachfolgend auf einem Monitor durch Hellschaltung der Mittelpunkte angezeigt werden.

Mit diesem System läßt sich zwar das Bewegungsverhalten individueller Leukozyten ermitteln. Die statistische Sicherheit der Ergebnisse ist jedoch auch hier aufgrund der geringen Anzahl verfolgbarer Individuen gering. Zellteilungsraten können mit dem System nicht bestimmt werden, da von den beiden bei einer Zellteilung hervorgehenden Tochterzellen nur eine weiterverfolgt wird.

In Journal of Neuroscience Methods, Vol. 1, 77-94, (1979) sind Verfahren und Vorrichtung nach den Oberbegriffen der Ansprüche 1 und 11 beschrieben. Hier wird das Objekt mit Hilfe eines Mikroskopphotometers mit Scanningtisch abgescannt und durch Abspeicherung der photometrischen Meßwerte und deren Darstellung auf einem Monitor Digitalbilder erzeugt. Außerdem wird vorgeschlagen, verschiedene Einzelzellen durch unterschiedliche Markensymbole zu markieren. Nähere Aussagen über den Verwendungszweck der unterschiedlichen Markensymbole sind jedoch nicht enthalten.

Eine Zusammenstellung möglicher interaktiver und automatischer Verfahren zur Bewegungsanalyse von Zellkulturen ist beispielsweise in dem von P.B. Noble and M.D. Levine herausgegebenen Buch "Computer-Assisted Analyses of Cell Locomotion and Chemotaxis", CRC Press, Inc. Boca Raton, Florida beschrieben.

Mit den dort beschriebenen, bekannten Verfahren wird jedoch nur das Bewegungsverhalten und zwar von wenigen ausgewählten Zellen erfaßt und ausgewertet. Aussagen über die Entwicklungsgeschichte von Zellen wie z.B. die Zellteilungsrate bzw. die Zahl der verschiedenen Generationenfolgen einer für statistische Zwecke erforderlichen großen Anzahl von Zellen lassen sich mit den dortigen Verfahren nicht gewinnen.

Es ist die Aufgabe der vorliegenden Erfindung, ein Verfahren und eine Vorrichtung anzugeben, mit denen gerade die letztgenannten Informationen bei möglichst geringem Arbeitsaufwand ermittelt werden können.

Diese Aufgabe wird durch die in den Ansprüchen 1 und 10 angegebenen Maßnahmen gelöst.

Mit dem erfindungsgemäßen System werden zeitliche Sequenzen der Entwicklungsgeschichte von Zellkulturen in einer Vielzahl verschiedener Bildfelder parallel aufgezeichnet. Demzufolge werden die für eine statistische Auswertung erforderlichen Daten in genügend großer Anzahl aufgenommen und liegen dann bei der Auswertung vor.

Da anschließend bei der Markierung von Zellen im Digitalbild auf dem Bildschirm jeweils mehrere Zellen gleichzeitig abgearbeitet werden, wird in dieser Phase des interaktiven Arbeitsprozesses eine erhebliche Arbeitsersparnis erzielt. Zudem bieten sich hier sinnvolle Ansätze zur Teilautomatisierung, denn die auszuwertenden Zellen brauchen nur im jeweils ersten Teilbild der zeitlichen Folge vom Benutzer markiert zu werden. In allen folgenden Bildern können die Positionen der Zellmarkern vom Vorbild übernommen werden und es müssen dann nur noch die auftretenden Veränderungen in diesen Bildern vom Benutzer korrigiert werden. Solche Veränderungen sind z.B. Verschiebungen von Zellen, Zellteilung oder Absterben von Zellen, das Einwandern oder Auswandern von einzelnen Zellen aus dem ausgewählten Bildfeld.

Da die statistischen Kenngrößen für die verschiedenen Bildfelder bzw. die verschiedenen markierten Zellen getrennt ermittelt und abgespeichert werden, sind die Ergebnisse des Verfahrens besonders aussagekräftig. Denn auf diese Weise ist es möglich, den verfälschenden Einfluß von toten Zellen oder Zellen, die in das Bildfeld hineingewandert oder hinausgewandert sind, auf das Ergebnis zu eliminieren.

Die statistischen Kenngrößen können beispielsweise die Zellteilungsrate für einzelne Gruppen von Zellen, die Beweglichkeit der verschiedenen Zellen oder die maximale Anzahl von Generationenfolgen bis zum Absterben der Zellkultur sein.

Das Verfahren erlaubt es weiterhin, Zellstammbäume für einzelne Zellen zu bilden und auf dem Bildschirm dazustellen.

Damit die Positionen der Marken eines zeitlich folgenden Bildes der Zellkultur mit den Positionen im Vorbild möglichst gut übereinstimmt, ist es vorteilhaft die Bilder auf dem Schirm so zueinander zu justieren, daß Bildverschiebungen oder eine gemeinsame Bewegung der gesamten Zellkultur möglichst nicht in Erscheinung tritt. Die wird mit einem Verfahrensschritt erreicht, in dem die beiden aufeinanderfolgenden Bilder so zueinander justiert werden, daß die Summe der Abweichungen der Zellpositionen in beiden Bildern minimal ist. Hierzu eignen sich besonders Bildanalysesysteme, mit denen die Schwerpunkte der Zellen in den einzelnen Bildern automatisch bestimmt werden.

Weitere Vorteile der Erfindung ergeben sich aus der nachfolgenden Beschreibung von Ausführungsbeispielen anhand der Figuren 1 bis 10 der beigefügten Zeichnungen.
- Figur 1: ist ein Blockdiagramm, das die einzelnen Komponenten eines zur Durchführung des Verfahrens geeigneten Arbeitsplatzes sowie die Verbindung der Komponenten untereinander darstellt;
- Figur 2 bis 7: sind Skizzen, die den Bildschirminhalt mit den aufgenommenen Zellbildern in verschiedenen Stadien des Verfahrens wiedergeben;
- Figur 8: ist ein Diagramm, in dem als Ergebnis des Verfahrens die Entwicklung der Zellzahlen für drei verschiedene Zellkulturen über der Zeit dargestellt ist;
- Figur 9a und 9b: sind beispielhafte Darstellungen der Stammbäume von ausgewählten Zellen;
- Figur 10a und 10b: sind Diagramme, in denen die Zykluszeit sowie der Mitoseindex für die Zellen eines Bildfeldes über die Zeit dargestellt ist.

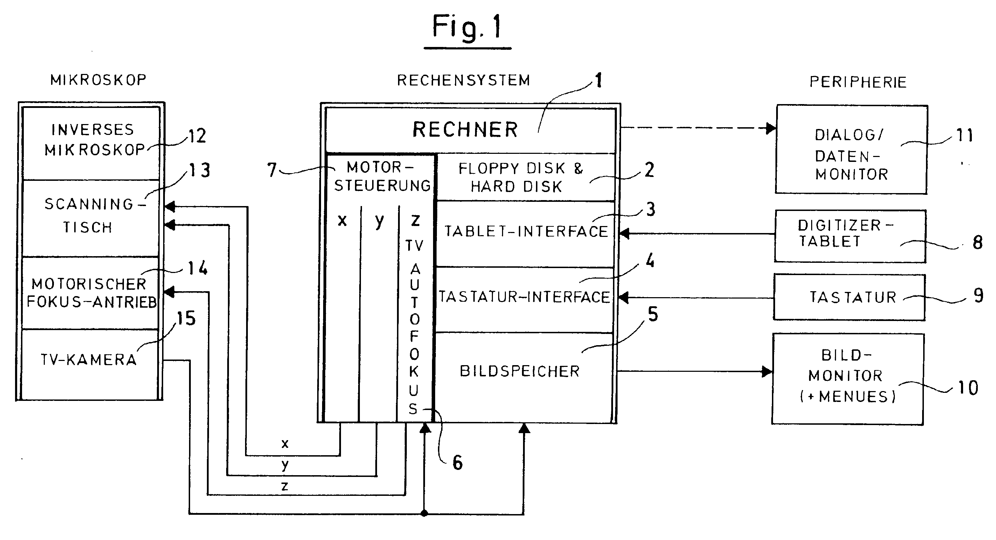

Der in Figur 1 im Blockschaltbild dargestelle Arbeitsplatz zur Durchführung des erfindungsgemäßen Verfahrens gliedert sich in drei Bereiche: In das eigentliche Mikroskop, in das an das Mikroskop angeschlossene Rechnersystem sowie in die Peripheriegeräte, die den interaktiven Betrieb mit dem Benutzer ermöglichen.

Als Mikroskop ist ein herkömmliches inverses Mikroskop (12) mit einem in zwei Koordinaten beweglichen Scanningtisch (13) gewählt. Das Mikroskop ist mit einem motorischen Fokusantrieb (14) ausgerüstet und besitzt an einem Bildausgang eine TV-Kamera (15). Der Scanningtisch (13) dient dazu, die zu untersuchenden Zellkulturen über dem Objektiv des Mikroskops zu positionieren. Er besitzt einen extra großen Fahrbereich, damit eine Vielzahl von Probengefäßen gleichzeitig aufgenommen und nacheinander abgearbeitet werden kann. Ein zur Durchführung des Verfahrens geeignetes Mikroskop wird beispielsweise unter der Bezeichnung "Axiovert" von der Anmelderin vertrieben.

Der Rechner (1) kann beispielsweise ein Personal-Computer vom Typ IBM PC/AT sein, der standardmäßig mit einem Massenspeicher (2) in Form eines Diskettenlaufwerks und einem Festplattenlaufwerk ausgerüstet ist. Der Rechner (1) besitzt außerdem ein Tablettinterface (3) zum Anschluß des Digitisiertabletts (8) sowie ein Tastaturinterface (4), an das die Eingabetastatur (9) angeschlossen ist.

Außerdem ist der Rechner (1) mit einem Bildspeicher (5) versehen. Dieser Bildspeicher enthält gleichzeitig die nötigen Bausteine zur Digitalisierung des von der Kamera (15) abgenommenen Bildes und zusätzliche Bildverarbeitungshardware. Als Bildspeicher kann beispielsweise der von der Fa. Matrox unter der Typbezeichnung MVP-AT angebotene Baustein verwendet werden. An den Bildspeicher (5) ist ein Monitor (10) angeschlossen, auf dem die Zellbilder dargestellt und die vom Rechner (1) für den Dialog mit dem Benutzer erzeugte Graphik überlagert werden kann. Für letztere Funktion kann jedoch auch wie durch den gestrichelten Pfeil angedeutet ein separater Datendialogmonitor (11) wie beispielsweise der ohnehin vorhandene Bildschirm des Rechners (13) eingesetzt werden.

In den Rechner (1) ist außerdem die Motorsteuerung (7) integriert, von der die Antriebsmotoren des Scanningtisches (13) und der Antriebsmotor für den Fokus-Antrieb (14) des Mikroskops gesteuert werden. Teil der Motorsteuerung ist weiterhin eine Autofokuseinrichtung (6), der das Signal der Kamera (15) zugeführt ist und die den Fokusantrieb (Z) in Richtung auf maximalen Bildkontrast bewegt.

Zur Durchführung des erfindungsgemäßen Verfahrens werden die auf dem Scanningtisch (13) positionierten Zellkulturen in regelmäßigen zeitlichen Abständen von beispielsweise zwei Stunden unter dem Mikroskop durchgemustert und mit der TV-Kamera (15) Bilder aus aneinander angrenzenden Bildfeldern jeder Kultur aufgenommen und an den Bildspeicher (5) übergeben. Die digitalisierten Bilder werden hierbei nach Bildfeldern getrennt auf der Festplatte des Massenspeichers (2) abgelegt. Von dort sind nach Abschluß aller Bildaufnahmesequenzen die Zellbilder in jedem Bildfeld für die verschiedenen Beobachtungszeiten abrufbar.

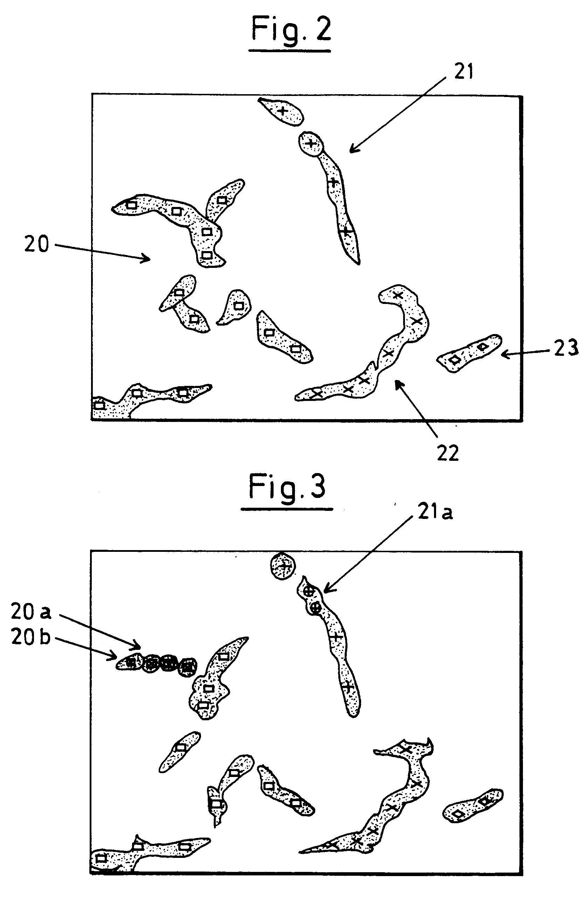

Die Auswertung der Zellbildsequenzen erfolgt interaktiv. Hierzu werden die Zellbilder auf dem Monitor (10) dargestellt. Gleichzeitig werden die Zellen im Bild vom Benutzer mittels einer auf dem Bildschirm (10) positionierbaren Cursor-Marke markiert, deren Bewegung mit Hilfe des Digitisiertabletts (8) gesteuert wird. Nachfolgend wird der interaktive Auswertevorgang detaillierter anhand der Figuren 2-7 beschrieben, in denen die Bildsequenz eines willkürlich ausgewählten Bildfeldes beispielhaft dargestellt ist:

Im ersten Bild der Sequenz (Figur 2) werden die einzelnen Zellen alle markiert. Hierbei sorgt eine entsprechende Software dafür, daß vom Benutzer für verschiedene Gruppen von Zellen unterschiedliche Markensymbole gesetzt werden können. Die verschiedenen Zellgruppierungen sind in Figur 2 mit (20,21,22 und 23) bezeichnet.

Das in Figur 3 dargestellte, nächste Bild der Sequenz wird zuerst lagemäßig gegenüber dem Vorbild (Figur 2) justiert. Hierbei führt der Rechner (1) eine Echtzeit-Subtraktion der zu bestimmten Bildpixeln gehörenden Signale beider Bilder durch und korrigiert dabei ein durch Driften der Apparatur bedingtes Verschieben der Schwerpunkte der Zellen. Die in Figur 2 bereits gesetzten Zellmarken werden in das neue Bild (Figur 3) übernommen. Der Benutzer muß deshalb nur noch die auftretenden Veränderungen korrigieren. Dies sind einmal Bewegungen einzelner Zellen, Zellteilung und Absterben, sowie das Auswandern und Einwandern von Zellen aus bzw. in das Bildfeld.

In Figur 3 sind beispielsweise gegenüber Figur 2 an den mit (20a und 20b) bezeichneten Stellen der Zellgruppe (20) sowie an der mit (21a) bezeichneten Stelle in der Zellgruppe (21) Teilungen erfolgt. Die Tochterzellen werden hier mit einer anderen Marke versehen. Diese können über die Farbe unterschieden werden. In der Darstellung nach Figur 3 ist hingegen zur besseren Sichtbarkeit ein Doppelsymbol gewählt, nämlich das Quadrat mit dem diagonalen Kreuz für die Tochterzellen der ersten Generation in der Zellgruppe (20) und das mit einem Kreis versehene Kreuz für die Tochterzellen der Zellgruppe (21).

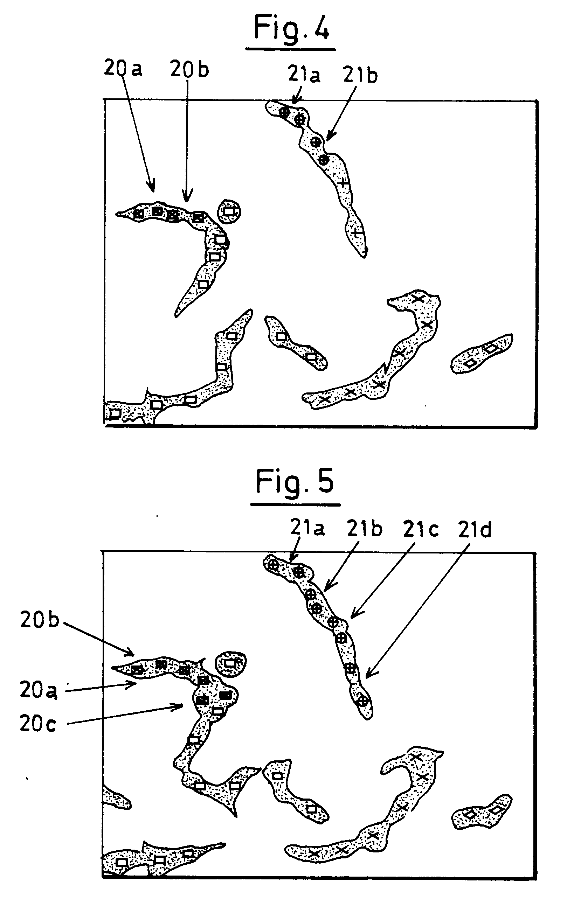

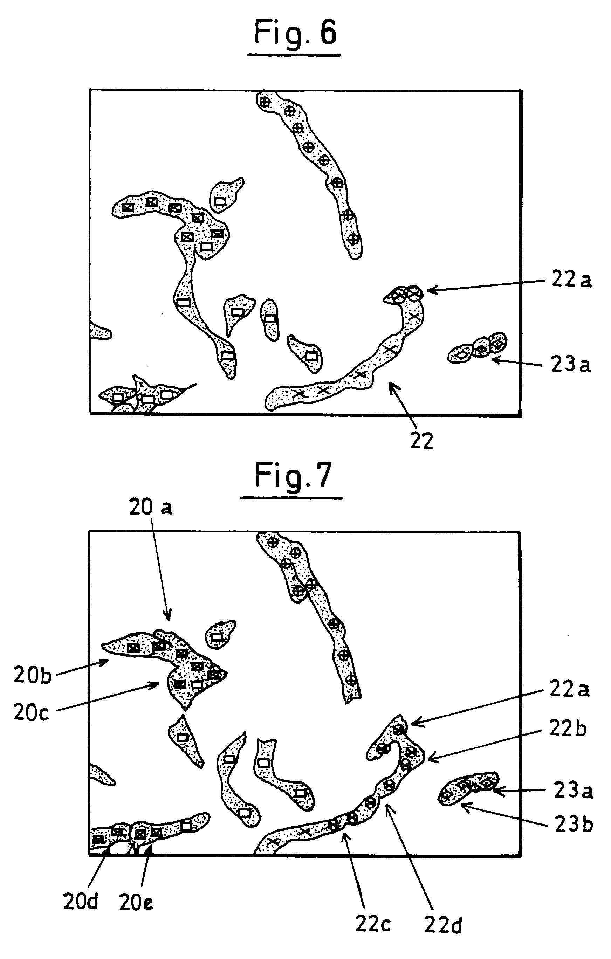

Auf die gleiche Weise werden in den nachfolgenden Bildern (vergl. Figur 4-7) weitere Zellteilungen durch den Benutzer festgestellt und die Tochterzellen mit den entsprechenden Markierungen bezeichnet. Zu dem in Figur 7 dargestellten Zeitpunkt haben sich schließlich sieben Zellen der Zellgruppe (20) (siehe Pfeile 20a-20e), vier Zellen der Zellgruppe (21) (Pfeile 21a-d), vier Zellen der Zellgruppe (22) (22a-22d) und zwei Zellen der Zellgruppe (23) (23a und 23b) geteilt und es ist die entsprechend doppelte Anzahl von Tochterzellen der ersten Generation entstanden.

In der Regel werden sich auch diese Tochterzellen wieder mehrfach teilen. Dann sind für diese nächste Generation vom Benutzer wieder andere Marken zu vergeben. Der weitere Fortgang des Verfahrens soll hier nicht mit zusätzlichen Figuren illustriert werden.

Die beschriebene inkrementelle Arbeitsweise, bei der jeweils nur Veränderungen gegenüber dem Vorbild eingetragen werden müssen, bringt erhebliche Arbeitsersparnis bei der interaktiven Auswertung der Zellbilder mit sich. Außerdem läßt sich diese Verfahrensvariante leicht weiter dadurch automatisieren, daß beispielsweise mit den bekannten Mitteln der Bildanalyse von einem entsprechenden Prozessor jedes neue Bild einer Folge unter Berücksichtigung der Kenntnisse des vorausgegangenen Bildes auf Zellteilung, Zellauswanderung etc. untersucht wird und die Ergebnisse bereits eingetragen werden, d.h. die entsprechenden neuen Marken bereits durch die Bildanalyseeinrichtung eingetragen werden. Der Benutzer hat dann nur noch die Aufgabe korrigierend einzugreifen und das bildanalytisch ermittelte Ergebnis im Bedarfsfalle zu berichtigen.

Der Rechner (1) speichert die Anzahl und die Positionen aller verschiedener, in den Bildern einer Sequenz gespeicherten Markentypen. Aus diesen gespeicherten Informationen werden anschließend Aussagen über die beobachtete Zellkultur nach verschiedenen Kriterien abgeleitet.

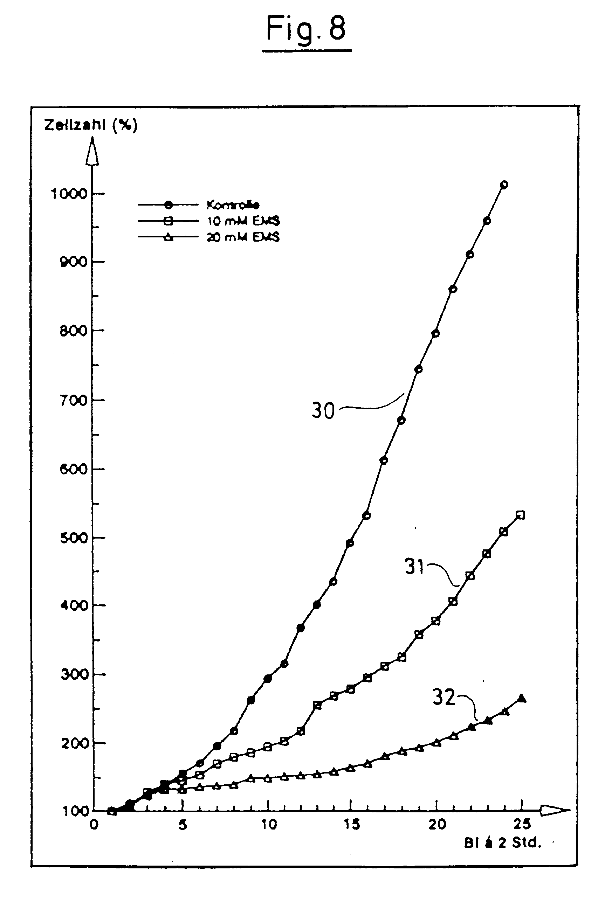

Eine Art der Auswertung, die sich an eine Ergebnisdarstellung anlehnt, wie sie der derzeit üblichen Auswertung von Zellbildern durch einfaches Auszählen der Gesamtzahl der Zellen entspricht, zeigt Figur 8. Die mit (30,31 und 32) bezeichneten Kurven geben das Zellwachstum, d.h. die absolute Anzahl der Zellen in allen Bildfeldern einer Kultur für drei verschiedene Zellkulturen in aufeinanderfolgenden Beobachtungszeiträumen wieder. Für den dargestellten Fall waren die Zellkulturen, zu denen die Graphen (31 und 32) gehören, unterschiedlichen Konzentrationen einer toxischen Substanz ausgesetzt, während der Graph (30) die Entwicklung einer unbehandelten Kontrollkultur darstellt.

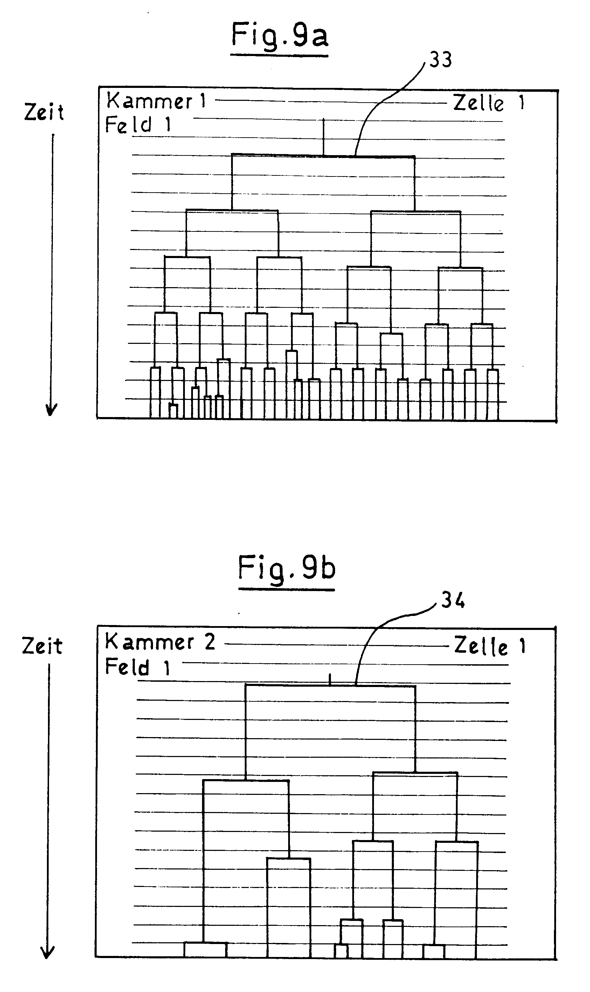

Das Verfahren liefert jedoch zusätzlich weit aussagekräftigere Ergebnisse als die integrale Darstellung der absoluten Gesamtzahl der Zellen in den Kulturen. Da die Information über den Generationswechsel aller Zellen abgespeichert ist, lassen sich außerdem für jede beliebige Zelle der Ausgangspopulation Zellstammbäume erstellen, wie dies in den Figuren 9a,9b dargestellt ist. Figur 9a zeigt den Zellstammbaum für eine Zelle der unbehandelten Kontrollkultur in zeitgetreuer Darstellung. Dabei geben die waagerecht verlaufenden Streifen, die über den Zellstammbaum (33) gelegt sind, jeweils konstante Zeitabschnitte wieder. Hieraus läßt sich sehr schön erkennen, daß die Zykluszeit zwischen aufeinanderfolgenden Generationen etwa konstant ist und ihr Wert läßt sich leicht überschlagsmäßig bestimmen. Figur 9b zeigt den Stammbaum einer Zelle der behandelten Kultur. Aus dem Stammbaum (34) läßt sich ablesen, daß im Vergleich zu Figur 9a weniger Teilungsvorgänge stattgefunden haben und die Zykluszeit für die einzelnen Generationen länger ist.

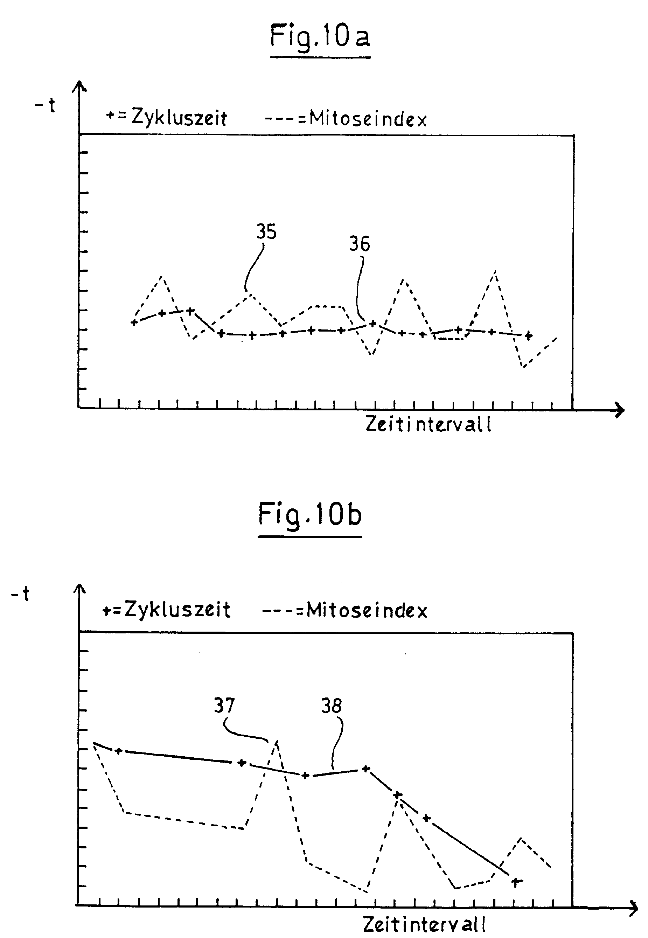

In Figur 10a sind die Durchschnittswerte für die Zykluszeit und den Mitoseindex aller Zellen der Kontrollpopulation in ihrem zeitlichen Verhalten, d.h. in aufeinanderfolgenden Zeitintervallen dargestellt. Der Mitoseindex ist die Teilungsrate einer Zellkultur, normiert auf die Gesamtzahl der Zellen, die in dem betreffenden Zeitabschnitt in der Kultur vorliegen.

Diese Größen sind für ungestört wachsende Zellpopulationen im allgemeinen konstant und entsprechend verhalten sich die mit (35 und 36) bezeichneten Graphen in der Darstellung nach Figur 10a. Für Zellpopulationen, denen toxische Substanzen zugefügt wurden, ergeben sich zunächst höhere Zykluszeiten die wieder kürzer werden, wenn sich die Zellen erholt haben. Der Mitoseindex ist bei behandelten Zellen im Mittel geringer. Dies ist in der Darstellung nach Figur 9b auch deutlich zu sehen.

## Patentansprüche

1. Verfahren zur Auswertung von Zellbildern, wobei
- mehrere Bilder der gleichen Zellkultur in zeitlicher Folge aufgenommen und in digitaler Form abgespeichert werden, wobei die Größe des Bildfeldes so gewählt ist, daß sich mehrere Einzelzellen in einem Bildfeld befinden,
- die Digitalbilder in zeitlicher Folge auf einem Bildschirm dargestellt werden,
- die verschiedenen Einzelzellen auf dem Bildschirm mit Markensymbolen markiert werden, wobei unterschiedliche Zellen bzw. Zellgruppen (20-23) mit verschiedenen Markensymbolen versehen und die Positionen der Markensymbole abgespeichert werden,
- und anschließend aus den Veränderungen in zeitlich aufeinanderfolgenden Digitalbildern statistische Kenngrößen der Zellkultur ermittelt werden,
dadurch gekennzeichnet,
- daß die Bilder in zeitlicher Folge jeweils parallel für eine Vielzahl verschiedener Bildfelder aufgenommen und digital abgespeichert werden,
- daß die Markierung der Einzelzellen mindestens im jeweils ersten Digitalbild (Fig. 2) der zeitlichen Folgen erfolgt,
- daß im jeweils nachfolgenden Digitalbild die Markensymbole automatisch unter Berücksichtigung der Markensymbole des Vorbildes gesetzt werden und die automatisch gesetzten Markensymbole vom Benutzer korrigiert werden und
- daß die statistischen Kenngrößen für die verschiedenen Bildfelder bzw. die verschiedenen Markensymbole der zeitlichen Folgen jeweils getrennt ermittelt und abgespeichert werden.

2. Verfahren nach Anspruch 1, dadurch gekennzeichnet, daß die Zellen nach Zellgenerationen klassifiziert werden und die Anzahl der Zellen in den verschiedenen Zellgenerationen ermittelt und abgespeichert wird.

3. Verfahren nach Anspruch 1, dadurch gekennzeichnet, daß die Zellteilungsrate für einzelne Bildfelder oder unterschiedlich markierte Zellen bzw. Gruppen von Zellen ermittelt und abgespeichert wird.

4. Verfahren nach Anspruch 1, dadurch gekennzeichnet, daß die Beweglichkeit der einzelnen unterschiedlich markierten Zellen bzw. Gruppen von Zellen ermittelt und abgespeichert wird.

5. Verfahren nach Anspruch 1, dadurch gekennzeichnet, daß Zellstammbäume (33, 34) für einzelne Zellen bzw. Generationenfolgen von Zellen gebildet und auf dem Bildschirm dargestellt werden.

6. Verfahren nach Anspruch 1, dadurch gekennzeichnet, daß die Aufnahme der verschiedenen Bildfelder mittels eines motorischen Kreuztisches (13) erfolgt, der in mehreren, zeitlich aufeinanderfolgenden Sequenzen jeweils unterschiedliche, aneinander grenzende Bereiche der Zellkultur unter einem Mikroskop (12) positioniert.

7. Verfahren nach Anspruch 1, dadurch gekennzeichnet, daß im jeweils nachfolgenden Digitalbild (Fig. 3) die Markensymbole des Vorbildes (Fig. 2) übernommen werden und auftretende Veränderungen durch Verschieben bzw. zusätzliches Setzen von Markensymbolen korrigiert werden.

8. Verfahren nach Anspruch 7, dadurch gekennzeichnet, daß die Ermittlung der Zellpositionen mit Hilfe eines Bildanalysesystems erfolgt.

9. Verfahren nach Anspruch 8, dadurch gekennzeichnet, daß vor Beginn der Auswertung des zeitlich folgenden Digitalbildes dieses gegenüber dem Vorbild so verschoben wird, daß die Summe der Abweichungen der Zellpositionen in beiden Bildern minimal wird.

10. Vorrichtung zu Durchführung des Verfahrens nach einem der Ansprüche 1-10, enthaltend:
- ein Mikroskop (12) mit einem in mindestens zwei Richtungen (x, y) positionierbaren Objekttisch (13),
- Mitteln zur Aufnahme einer Vielzahl von Videobildern der zu untersuchenden Probe,
- einem graphikfähigen Rechner (1) mit einem Markengenerator zur Erzeugung von Markensymbolen unterschiedlichen Typs,
- einem Bildspeicher (5) zur Speicherung in regelmäßigen Zeitabständen aufgenommener Videobilder als Digitalbilder,
- einem Monitor (10), auf dem die im Bildspeicher abgelegten Digitalbilder zusammen mit den vom Rechner erzeugten Markensymbolen überlagert darstellbar sind,
- einer Einrichtung (8) zur Positionierung der Markensymbole im Bildfeld und Speicherung der Bildkoordinaten der Markensymbole für die verschiedenen Bilder,
dadurch gekennzeichnet,
- daß das Mittel zur Aufnahme der Videobilder eine Fernseheinrichtung ist,
- daß der Bildspeicher zur Speicherung einer Vielzahl in aneinander angrenzenden Bildfeldern aufgenommener Videobildsequenzen ausgelegt ist,
- daß ein Auswerteprogramm vorgesehen ist, das aus der Anzahl der verschiedenen Markensymbole in den einzelnen Bildern sowie aus den Koordinaten der Markensymbole Kenngrößen für die beobachtete Zellkultur(en) ermittelt und
- daß ein weiteres Programm zum Setzen von Markensymbolen in einem nachfolgenden Digitalbild anhand der im vorhergehenden Digitalbild eingefügten Markensymbole vorgesehen ist, wobei die gesetzten Markensymbole vom Benutzer korrigierbar sind.

11. Vorrichtung nach Anspruch 10, wobei die gesetzten Markensymbole mit der Einrichtung (8) zur Positionierung der Markensymbole korrigierbar sind.

## Claims

1. Method for evaluating cell images whereby
- several images of the same cell culture are recorded in chronological sequence and digitally stored, whereby the size of the image field is selected so that several individual cells are located in one image field,
- the digital images are presented in chronological sequence on a video screen,
- the various individual cells are marked by marker symbols on the video screen, whereby various cells or cell groups (22, 23) are provided with different marker symbols and the positions of the marker symbols are stored, and
- thereafter statistical characteristics of the cell culture are determined from variations in chronologically successive digital images,
characterized by the fact
- that the images are recorded and digitally stored in chronological sequence and in parallel fashion for a plurality of different image fields,
- that the marking of the individual cells is carried out at least in each first digital image of the chronological sequences,
- that in the respective successive digital image the marker symbols are set automatically under consideration of the marker symbols set into the previous image and that the marker symbols set in automatically are correctable by the user and
- that the statistical characteristics are determined and stored for the different image fields or the different marker symbols of the chronological sequences separately.

2. Method of claim 1, characterized by the fact that the cells are classified by cell generations and that the number of cells in the various cell generations is determined and stored.

3. Method of claim 1, characterized by the fact that the rate of cell divisions is determined and stored for individual image fields or for differently marked cells or cell groups.

4. Method of claim 1, characterized by the fact that the mobility of the individual differently marked cells or cell groups is determined and stored.

5. Method of claim 1, characterized by the fact that cell pedigrees (33, 34) are formed for individual cells or generation sequences of cells and are presented on the video screen.

6. Method of claim 1, characterized by the fact that the recording of various image fields is performed by means of a motorized cross stage (13) which, in several chronologically successive sequences, respectively positions different, mutually adjacent regions of the cell culture under a microscope (12).

7. Method of claim 1, characterized by the fact that in each successive digital image (Fig. 3) the marker symbols of the respective previous image (Fig. 2) are adopted and that occurring variations are corrected by shifting or setting of additional marker symbols.

8. Method of claim 7, characterized by the fact that the determination of the cell positions is performed by means of an image analyses system.

9. Method of claim 8, characterized by the fact that the chronologically successive digital image, prior to the start of the evaluation, is shifted relative to the previous image so that the sum of the variations of the cell positions in both images will be minimized.

10. Apparatus for carrying out the method of one of claims 1-9, comprising:
- a microscope (12) with an object stage (13) being positionable in at least two directions (x, y),
- means for recording a plurality of video images of the object to examined,
- a computer (1) having graphics capability and a marker generator for generating various types of marker symbols,
- an image memory (5) for storing video images as digital images which have been recorded in regular time intervals,
- a monitor (10) on which the digital images stored in the image memory can be presented in superimposed fashion along with the marker symbols generated by the computer,
- a device (8) for positioning the marker symbols in the image field and for storing the image coordinates of the marker symbols for various images,
characterized by the fact
- that the means for recording the video images is a television device,
- that the image memory is adapted for storing a plurality of video image sequences recorded in mutually adjacent image fields,
- that an evaluating program is provided which determines the characteristics of the observed cell culture from the number of various marker symbols and the coordinates of the marker symbols and
- that an additional program is provided for setting in marker symbols in a successive digital image by the aid of the marker symbols set into the previous digital image, whereby the marker symbols, being set in, can be corrected by the user.

11. Apparatus of claim 10, whereby the marker symbols, being set in, are correctable by means of the device (8) for positioning the marker symbols.

## Revendications

1. Procédé pour analyse d'images de cellules qui permet
- de réaliser plusieurs images successives d'une culture cellulaire donnée et d'enregistrer ces images sous forme numérique, en choisissant l'étendue du champ d'image de manière à ce que celui-ci contienne plusieurs cellules individuelles,
- de visualiser lesdites images numériques sur l'écran de manière consécutive,
- de marquer les différentes cellules individuelles reproduites sur l'écran de symboles, les différentes cellules ou groupes de cellules (20-23) étant dotés de symboles différents et les positions des différents symboles étant mises en mémoire,
- et de déterminer ensuite des caractéristiques statistiques de la culture cellulaire en fonction des variations relevées dans les images numériques consécutives,
caractérisé en ce que
- les images consécutives sont réalisées parallèlement pour une multitude de champs d'image différents, puis enregistrées sous forme numérique,
- les cellules individuelles doivent être marquées au moins sur la première image numérique respectivement (fig. 2) d'une succession de prises de vues,
- les mêmes symboles de marquage sont apposés automatiquement aux cellules correspondantes respectivement dans les images numériques suivantes et que les symboles attribués par voie automatique sont ensuite corrigés par l'utilisateur,
- les caractéristiques statistiques des différents champs d'image ou des différents symboles des successions de prises de vues sont déterminées et mises en mémoire séparément.

2. Procédé selon la revendication 1, caractérisé en ce que les cellules sont classées par générations et que le nombre de cellules compté pour chaque génération est déterminé et mis en mémoire.

3. Procédé selon la revendication 1, caractérisé en ce que le taux de division cellulaire est déterminé et mis en mémoire pour différents champs d'image ou pour différentes cellules ou différents groupes de cellules, identifiés par leurs symboles.

4. Procédé selon la revendication 1, caractérisé en ce que la mobilité des cellules ou groupes de cellules ainsi marqués est déterminée et mise en mémoire.

5. Procédé selon la revendication 1, caractérisé en ce que des arbres généalogiques (33, 34) de cellules individuelles ou de lignées de cellules sont formés et visualisés sur l'écran.

6. Procédé selon la revendication 1, caractérisé en ce que les prises de vues des différents champs d'image sont réalisées au moyen d'une platine motorisée à mouvements croisés (13) qui positionne différentes zones adjacentes d'une culture cellulaire sous un microscope (12) respectivement en plusieurs séquences consécutives.

7. Procédé selon la revendication 1, caractérisé en ce que les symboles employés dans une image de départ (fig. 2) sont repris dans l'image numérique suivante (fig. 3) et que les changements qui surviennent sont corrigés par déplacement ou par attribution de symboles.

8. Procédé selon la revendication 7, caractérisé en ce que les cellules sont localisées à l'aide d'un système d'analyse d'images.

9. Procédé selon la revendication 8, caractérisé en ce qu'une image numérique, avant d'être analysée, est décalée par rapport à l'image précédente de manière à ce que les décalages des positions de cellules dans leur ensemble soient réduits à un minimum.

10. Dispositif pour la mise en oeuvre du procédé selon les revendications 1 à 9, comprenant
- un microscope (12) équipé d'une platine porte-objet (13) qui peut être positionnée selon au moins deux axes (x, y),
- des moyens pour réaliser un grand nombre d'images vidéo de l'échantillon à examiner,
- un ordinateur à fonctions graphiques (1) muni d'un générateur de marques servant à créer les différents types de symboles,
- une mémoire d'images (5) destinée au stockage, sous forme numérique, des images vidéo enregistrées dans des intervalles réguliers,
- un écran (10) pouvant visualiser les images numériques stockées dans la mémoire d'images avec superposition des symboles générés par l'ordinateur,
- un dispositif (8) servant à positionner les symboles dans le champ d'image et à mettre en mémoire les coordonnées des symboles dans les différentes images,
caractérisé en ce que
- les moyens d'enregistrement d'images vidéo sont constitués par un équipement TV,
- la mémoire d'images est conçue de façon à permettre le stockage d'une multitude de séquences d'images vidéo prises dans des champs d'images attenants l'un à l'autre,
- un programme d'analyse est prévu qui déduit de la somme des différents symboles dans les images consécutives et des coordonnées desdits symboles les signes caractéristiques de la culture cellulaire observée,
- un autre programme est prévu pour assurer l'insertion de symboles dans une image numérique en fonction des symboles mis en place dans l'image numérique précédente, les symboles ainsi insérés étant susceptibles d'être corrigés par l'utilisateur.

11. Dispositif selon la revendication 10, caractérisé en ce que les symboles mis en place peuvent être corrigés à l'aide du dispositif (8) servant à positionner les symboles.
